# FASCICULE DE BREVET EUROPEEN

(11) **EP 3 862 243 B1**
(45) Date de publication et mention de la délivrance du brevet: **13.09.2023**
(21) Numéro de dépôt: 21155503.2
(22) Date de dépôt: 05.02.2021
(51) Int. Cl.: B61D 17/08, B61D 17/04

(54) **PAROI DE VÉHICULE, DE PRÉFÉRENCE FERROVIAIRE, PROCÉDÉ DE FABRICATION ET VÉHICULE ASSOCIÉS**
FAHRZEUGWAND, INSBESONDERE EINES SCHIENENFAHRZEUGS, ENTSPRECHENDES HERSTELLUNGSVERFAHREN UND FAHRZEUG
WALL FOR VEHICLE, PREFERABLY A RAILWAY VEHICLE, ASSOCIATED METHOD FOR MANUFACTURING SAME AND VEHICLE

(30) Priorité: 07.02.2020 FR 2001213
(43) Date de publication de la demande: 11.08.2021
(73) Titulaire: ALSTOM Transport Technologies, 93400 Saint-Ouen (FR)
(72) Inventeur: MIFSUD, Marc, 78620 L'ETANG LA VILLE (FR)
(74) Mandataire: Lavoix

(56) Documents cités:
- EP-A1- 1 862 366
- EP-A1- 3 254 875
- DE-A1-102010 014 962
- DE-C1- 19 612 342
- FR-A1- 2 778 617

## Description

La présente invention concerne les parois de véhicule, de préférence de véhicule ferroviaire, comprenant :
- au moins un ensemble de renforts structurels, chaque renfort structurel comprenant un élément en acier embouti ; et
- une peau de véhicule.

Les parois de véhicule, notamment de véhicule ferroviaire, en plus d'assurer la définition d'un intérieur d'un véhicule par rapport à son extérieur, ont un rôle structurel pour le véhicule. Les parois de véhicule doivent notamment assurer une rigidité suffisante du véhicule.

De telles parois étant visibles depuis l'extérieur du véhicule, il est souhaité que de telles parois aient un aspect avantageux et soient par exemple dépourvues de déformations irrégulières. Ceci nécessite notamment le redressage d'éléments de la paroi lors ou avant le montage de la paroi sur le véhicule.

Par ailleurs et comme les parois ont un rôle structurel, il est connu d'utiliser des parois d'épaisseur élevée dont la masse est élevée

Les documents DE 10 2010 014962 A1 et DE 196 12 342 C1 divulguent des parois de véhicule.

De telles parois ne sont alors pas entièrement satisfaisantes puisqu'elles génèrent des coûts d'opération et de fabrication élevés du véhicule.

Un but de cette invention est de proposer une paroi de véhicule dont la masse est faible et dont la fabrication est simple.

A cet effet, l'invention a pour objet une paroi de véhicule conforme à la revendication 1.

Une paroi de véhicule dans laquelle les éléments sont solidarisés par soudage par résistance et/ou par soudage laser, avec ou sans l'apport d'une colle structurelle, assure une fabrication facile de la paroi, de telles méthodes de solidarisation assurant une faible déformation des éléments constituant la paroi de véhicule et permettant l'omission d'une étape de redressement de la peau. L'utilisation de la peau en combinaison d'éléments en acier emboutis assure par ailleurs la légèreté de la paroi.

Selon d'autres aspects avantageux de l'invention, la paroi de véhicule comprend l'une ou plusieurs des caractéristiques des revendications 2 à 4, prises isolément ou suivant toutes combinaisons techniquement possibles.

L'invention concerne en outre un procédé de fabrication d'une paroi de véhicule conforme à la revendication 5.

Selon d'autres aspects avantageux de l'invention, le procédé de fabrication d'une paroi de véhicule comprend l'une ou plusieurs des caractéristiques des revendications 6 à 9, prises isolément ou suivant toute combinaisons techniquement possibles.

L'invention concerne par ailleurs un véhicule conforme à la revendication 10.

Ces caractéristiques et avantages de l'invention apparaitront plus clairement à la lecture de la description qui va suivre, donnée uniquement à titre d'exemple non limitatif, et faite en référence aux dessins annexés sur lesquels :
[Fig 1] la figure 1 est une représentation schématique d'un véhicule, notamment d'un véhicule ferroviaire, comprenant une paroi de véhicule selon l'invention ;

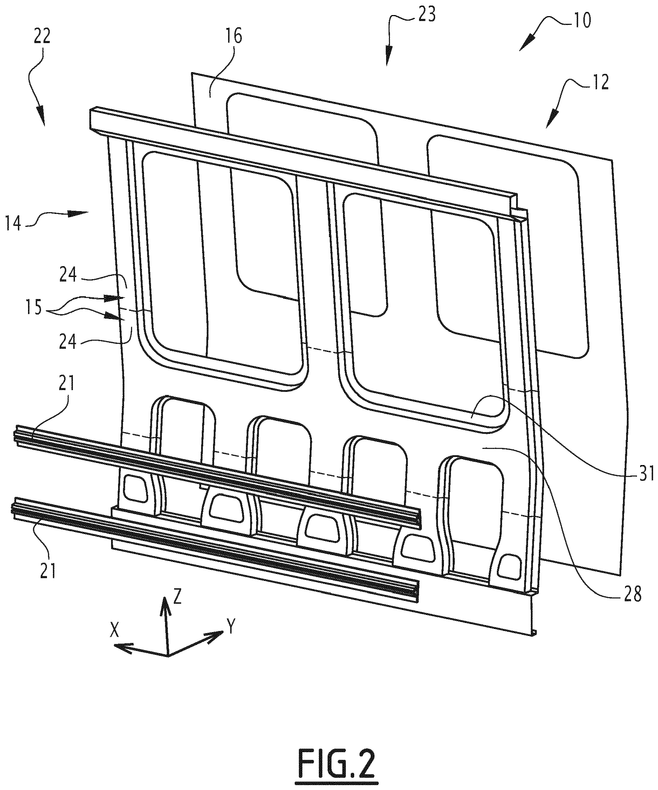

[Fig 2] la figure 2 est une représentation schématique éclatée, selon un axe latéral d'un véhicule, de la paroi de véhicule de la figure 1 ;
[Fig 3] la figure 3 est une vue en coupe perpendiculaire à un axe longitudinal du véhicule de la paroi de la figure 1 ; et

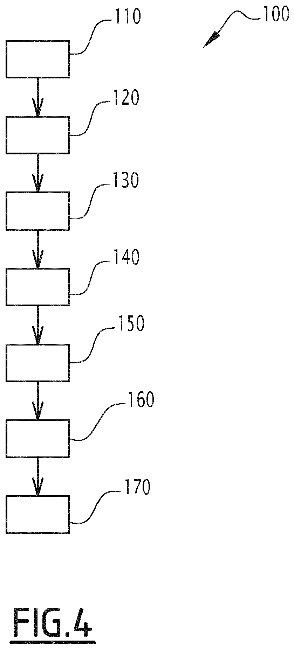

[Fig 4] la figure 4 est un organigramme du procédé de fabrication d'une paroi de véhicule des figures 1 à 3.

Dans la description qui suit, on considère une base orthonormée directe (X, Y, Z). La direction d'élévation Z est définie selon la hauteur du véhicule et correspond par exemple à la direction verticale lorsque le véhicule est sur une voie horizontale. La direction longitudinale X correspond à la direction avant-arrière du véhicule et la direction transversale Y correspond à la direction selon la largeur du véhicule.

Les termes « supérieur » et « inférieur » ainsi que « haut » et « bas » sont définis par rapport à la direction d'élévation Z. Les termes « gauche » et « droite » sont définis par rapport à la direction transversale Y dans le sens normal de circulation du véhicule.

Les termes « intérieur » et « extérieur » sont définis en référence à l'intérieur et l'extérieur du véhicule.

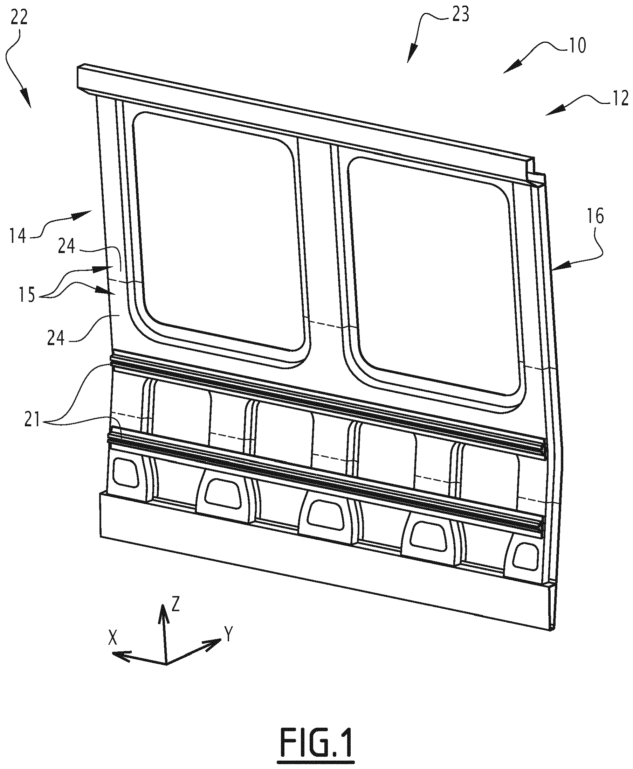

Un véhicule 10 comprenant une paroi de véhicule 12 est représenté en figure 1.

Le véhicule 10 est de préférence un véhicule ferroviaire. Le véhicule 10 est par exemple un véhicule ferroviaire tel un métro ou un tramway. En variante, le véhicule 10 est une automotrice, une voiture d'une automotrice ou toute voiture d'un véhicule ferroviaire de transport de passager ou de marchandise.

En variante, le véhicule est un véhicule routier, tel qu'un bus ou un car.

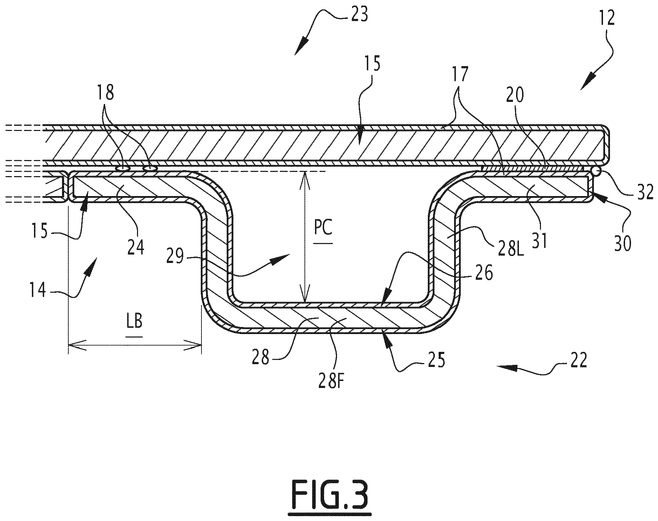

La paroi 12 comprend au moins un ensemble 14 de renforts structurels 15 et une peau 16 de véhicule. La paroi comprend de préférence une couche de protection 17 (figure 3).

La paroi 12 comprend des soudures 18 et/ou une couche de colle structurelle 20 connectant la peau 16 à l'ensemble 14 de renforts structurels 15. La paroi 12 comprend de préférence au moins un longeron 21.

La paroi 12 s'entend entre, et définit, un intérieur 22 de véhicule 10 et un extérieur 23 de véhicule.

L'ensemble 14 de renforts structurels 15 comprend de préférence une pluralité de renforts structurels 15. En particulier, la paroi 12 comprend de préférence entre quatre et quinze renforts structurels 15.

Chaque renfort structurel 15 comprend un élément 24 en acier embouti.

Chaque renfort structurel 15 est de préférence couvert de la couche de protection 17. La totalité de chaque renfort structurel est en particulier couvert de la couche de protection 17.

L'élément 24 en acier embouti est de préférence formé à partir d'un flan en acier ayant été embouti.

L'élément 24 en acier embouti comprend une face intérieure 25 et une face extérieure 26.

La distance entre la face intérieure 25 et la face extérieure 26 représentant l'épaisseur de l'élément 24 est comprise entre 1 mm et 5 mm.

L'élément 24 en acier embouti est de préférence formé en acier à très haute limite élastique. La limite élastique de l'acier formant l'élément 24 en acier embouti est par exemple supérieure à 450 MPa.

L'élément 24 en acier embouti est de préférence un corps creux. L'élément 24 en acier embouti est alors en forme de demi coquille et/ou a une section transversale ouverte.

L'élément 24 en acier embouti comprend en particulier une région creuse 28 définissant un volume intérieur 29. La région creuse 28 comprend de préférence un fond 28F, définissant un plan de fond, et des parois latérales 28L s'étendant selon un plan sécant au plan de fond.

L'élément 24 en acier embouti comprend un contour 30 correspondant au bord du flan embouti, et une bordure 31, aussi appelée bride, connectée à la région creuse 28 et s'étendant autour de la région creuse 28, entre la région creuse 28 et le contour 30.

Le volume intérieur 29 s'étend en particulier dans la région creuse 28, entre le fond et la bordure 31.

La profondeur PC de la région creuse 28, aussi appelée épaisseur du volume intérieur 29, est par exemple comprise entre 150 mm et 200 mm.

La largeur LB de la bordure 31, mesurée depuis sa jonction avec la région creuse 28 et le contour 30 est par exemple inférieure à 50 mm.

Selon une variante particulière, la bordure 31 comprend une multiplicité de tronçons, l'ensemble de ces tronçons n'entourant pas la totalité de la région creuse 28. Une périphérie de la région creuse 28 comprend alors au moins deux régions de jonction avec la bordure 31 et au moins deux sections du contour 30. Dans cette variante particulière, le renfort structurel 15 est par exemple en forme de poutre à profil en Oméga.

Selon une variante alternative, la bordure 31 comprend un unique tronçon entourant la totalité de la région creuse 28. La périphérie de la région creuse 28 ne consiste alors qu'en une unique région de jonction avec la bordure 31.

Les renforts structurels 15 formant l'ensemble 14 de renforts structurels 15 sont par exemple connectés entre eux. En particulier, les renforts structurels 15 formant l'ensemble 14 de renforts structurels 15 sont fixés entre eux, par exemple à l'aide d'un cordon de soudure s'étendant entre le contour 30 de deux renforts structurels 15 adjacents.

Les renforts structurels 15, ou au moins une partie des renforts structurels 15, ont une forme générale de L ou de C ou de T, c'est-à-dire ils définissent un coin ou une jonction non-linéaire de l'ensemble 14 de renforts. L'ensemble 14 définit par exemple une ouverture telle une fenêtre de la paroi 12. Les renforts structurels 15 s'étendent en particulier selon un axe non-rectiligne, leur forme différant alors d'une forme de poutre.

Chaque longeron 21 s'étend de préférence selon la direction longitudinale X. Chaque longeron 21 est par exemple un profilé, de préférence formé en aluminium.

Chaque longeron 21 est par exemple connecté à au moins deux renforts structurels 15. Chaque longeron 21 est de préférence fixé à la face intérieure 25 d'au moins deux renforts structurels 15. Chaque longeron 21 est par exemple collé et/ou riveté à la face intérieure 25 d'au moins deux renforts structurels 15. Chaque longeron 21 est par exemple adapté pour maintenir des éléments de confort dans le véhicule 10, tels par exemple une table et/ou un siège.

La peau 16 de véhicule 10 est une feuille en acier. La limite élastique de l'acier formant la peau 16 est par exemple supérieure 450 MPa.

La peau 16 est fixée à au moins un renfort structurel 15 par soudage par résistance et/ou par soudage laser, avec ou sans apport de colle structurelle. La peau 16 est de préférence fixée à chacun des renforts structurels 15 par soudage par résistance et/ou par soudage laser, avec ou sans apport de colle structurelle.

La peau 16 est de préférence fixée à la face extérieure 26 du ou des renforts structurels 15. En particulier, la peau 16 est fixée à la face extérieure 26 en région de la bordure 31.

La peau 16 ferme la région creuse 28 de chaque renfort structurel 15.

La peau 16 est de préférence recouverte de la couche de protection 17. En particulier, la totalité de la peau 16 est recouverte de la couche de protection 17.

La couche de protection 17 comprend une couche de peinture déposée par cataphorèse. La couche de protection 17 est adaptée pour protéger des éléments métalliques, tels les renforts structurels 15, la peau 16 et/ou les longerons 21.

L'épaisseur de la couche de protection 17 est de préférence comprise entre 20 µm et 30 µm

La soudure 18 est de préférence une soudure par résistance. En variante, la soudure est une soudure laser. Chaque soudure 18 est disposée entre l'un des renforts structurels 15 et la peau 16. Chaque soudure 18 est en particulier disposée entre la bordure 31 d'un renfort structurel 15 et la peau 16.

La soudure 18 solidarise le renfort structurel 15 et la peau 16. La soudure 18 comprend par exemple un mélange des matériaux du renfort structurel 15 et de la peau 16 qui, à la suite de leur fusion et de leur solidification, solidarise le renfort structurel 15 et la peau 16.

La colle structurelle 20 est disposée entre l'un des renforts structurel 15 et la peau 16. La colle structurelle 20 est en particulier disposée entre la bordure 31 d'un renfort structurel 15 et la peau 16.

La colle structurelle 20 est par exemple formée par un liquide qui, après application entre le renfort structurel 15 et la peau 16, se solidifie et solidarise le renfort structurel 15 et la peau 16.

La colle structurelle 20 est par exemple une résine époxy.

Dans le mode de réalisation présenté en figure 3, la paroi 12 comporte un cordon étanche 32. Le cordon étanche 32 est par exemple un cordon en mastic. Le cordon étanche 32 s'étend entre la peau 16 de véhicule 10 et au moins un renfort structurel 15. Le cordon étanche 32 s'étend par exemple entre la bordure 31 et la peau 16. Le cordon étanche 32 est en particulier adapté pour empêcher l'infiltration de fluide, de préférence de liquide, depuis l'intérieur 22 et/ou depuis l'extérieur 23 vers le volume intérieur 29.

Dans un mode de réalisation non représenté, la paroi 12 de véhicule 10 est recouverte d'une couche de peinture. La couche de peinture s'étend par exemple directement sur l'ensemble 14 de renforts structurels 15 et/ou sur la peau 16. En variante, la couche de peinture s'étend sur la couche de protection 17.

Un procédé 100 de fabrication d'une paroi de véhicule 12 telle que précédemment décrite va maintenant être présenté.

Lors d'une première étape 110 de fourniture, un flan en acier est fourni pour chacun des renforts structurels 15 et une peau 16 de véhicule 10 est fournie.

Une étape d'emboutissage 120 à lieu à la suite de l'étape de fourniture 110. Lors de l'étape d'emboutissage 120, chacun des flans précédemment fournis est embouti en formant un renfort structurel 15. Chacun des flans est par exemple embouti à l'aide d'une presse à emboutir. En particulier, chaque flan, lors de l'étape d'emboutissage 120 est déformé par la presse à emboutir de sorte à former un renfort structurel 15. L'étape comprend avantageusement une sous étape de finition au cours de laquelle la pièce emboutie est découpée, de préférence à l'aide d'un dispositif de découpe laser, avantageusement à cinq axes, afin de former le renfort structurel 15. En particulier, le dispositif de découpe laser découpe les contours 30 du renfort structurel. Le dispositif de découpe laser découpe facultativement au moins une ouverture dans le renfort structurel 15.

A la suite de l'étape d'emboutissage 120, la peau 16 est découpée lors d'une étape facultative 130 de découpe laser. Lors de l'étape 130 de découpe laser, la peau est par exemple découpée à l'aide d'un faisceau laser.

L'étape de découpe laser 130 est suivie de la fixation de chacun des renforts structurels 15 sur la peau de véhicule 16 lors d'une étape 140 de fixation.

Lors de l'étape de fixation 140, chacun des renforts structurels 15 sont fixés sur la peau de véhicule 16 par soudage par résistance et/ou par soudage laser, avec ou sans l'apport d'une colle structurelle 20, pour former la paroi 12 de véhicule.

En particulier, une couche de colle structurelle 20 est par exemple appliquée entre chacun des renforts structurels 15 et la peau 16 et/ou une soudure 18 par résistance et/ou par soudage laser est formée entre chacun des renforts structurels 15 et la peau 16 pour solidariser chacun des renforts structurels 15 et la peau.

Les renforts structurels 15 sont par exemple solidarisés entre eux par soudure par résistance et/ou par soudure MAG avant ou après l'étape 140 de fixation.

A la suite de de l'étape 140 de fixation et/ou de la solidarisation facultative des renforts structurels entre eux, la paroi 12 est de préférence étanchéifiée lors d'une étape 150 d'étanchéification.

Lors de l'étape 150 d'étanchéification, une interface entre la peau de véhicule 16 et au moins un renfort structurel 15 est étanchéifiée par mise en place d'un cordon étanche 32, tel par exemple un joint de mastic.

A la suite de l'étape 140 de fixation et/ou de l'étape d'étanchéification 150, la couche de protection 17 déposée par cataphorèse est de préférence formée lors d'une étape de cataphorèse 160. L'étape 160 de cataphorèse est par exemple réalisée avant l'étape d'étanchéification 150.

Lors de l'étape de cataphorèse 160, une cataphorèse est effectuée sur la paroi de véhicule 12. Lors de l'étape de cataphorèse 160, la paroi de véhicule 12 formée à la suite de l'étape de fixation 140 et/ou de l'étape d'étanchéification 160 est immergée dans un bain de peinture hydrosoluble. La peinture présente dans le bain de peinture hydrosoluble est alors déposée sur la paroi formée à la suite de l'étape de fixation 140 et/ou de l'étape d'étanchéification 150 au moyen d'un courant électrique entre ladite paroi faisant office de cathode, et une anode immergée dans le bain.

A la suite de l'étape de fixation 140, et/ou de l'étape d'étanchéification 150 et/ou de l'étape de cataphorèse 160, la paroi de véhicule 12 formée à la suite de l'étape de fixation 140 est de préférence peinte lors d'une étape de peinture 170.

L'étape de peinture 170 n'est pas précédée d'une étape de redressage de la peau ou de préparation avant la peinture.

La fixation de chacun des renforts structurels 15 sur la peau 16 par soudage par résistance et/ou par soudage laser, avec ou sans l'apport d'une colle structurelle 20, assure une absence de déformation de la peau à proximité de la soudure 18 et de la colle structurelle 20 tout en assurant une tension de la peau 16 éliminant ainsi les déformations irrégulières de la peau et permettant la réalisation de l'étape de peinture 170 sans étape de redressage de la peau ou de préparation avant la peinture. En d'autres termes, il n'est pas nécessaire d'effectuer d'opération de redressage de la peau 16 avant les opérations de cataphorèse, apprêtage et peinture de finition. L'utilisation de la peau en combinaison d'éléments en acier emboutis assure par ailleurs la légèreté de la paroi par la présence de corps creux structurants.

La solidarisation par soudage par résistance et/ou par soudage laser, avec ou sans l'apport d'une colle structurelle 20, est particulièrement avantageuse et permet notamment la suppression d'une étape de redressage de la peau ou de préparation avant la peinture. La paroi 12 comprenant les renforts structurels 15 tels que précédemment décrits est par ailleurs particulièrement légère tout en conservant une rigidité élevée.

L'utilisation d'éléments en acier embouti 24 formés en acier à très haute limite élastique permet l'utilisation d'éléments emboutis, dont la réalisation est rapide, tout en ayant des éléments de haute performance structurelle assurant notamment une bonne rigidité de la paroi 12.

La couche de protection 17 comprenant une couche de peinture déposée par cataphorèse est par ailleurs particulièrement avantageuse pour assurer la robustesse de la paroi de véhicule 12 en protégeant notamment l'ensemble de la paroi 12 d'une oxydation.

Une paroi 12 comprenant une multiplicité de renforts structurels 14 est par ailleurs particulièrement avantageuse pour faciliter la fabrication de la paroi 12 tout en adaptant la forme de la paroi 12 pour améliorer ses performances structurelles.

La découpe laser de la peau 16 assure une découpe précise et rapide de la peau 16 tout en limitant sa déformation.

L'étape d'étanchéification 150 évite notamment l'infiltration d'eau dans la paroi 12 produite et assure donc une longévité améliorée de la paroi.

L'étape de peinture 170 sans redressage de la peau ou de préparation avant la peinture facilite la fabrication de la paroi de véhicule 12.

## Revendications

1. Paroi de véhicule (12), de préférence de véhicule ferroviaire, comprenant :
- au moins un ensemble (14) de renforts structurels (15), chaque renfort structurel (15) comprenant un élément en acier embouti (24) ; et
- une peau (16) de véhicule ;
où la peau de véhicule (16) est une feuille en acier, la peau de véhicule (16) étant fixée à au moins un renfort structurel (15) par soudage par résistance, avec ou sans l'apport d'une colle structurelle.

2. Paroi de véhicule (12) selon la revendication 1, dans laquelle l'élément en acier embouti (24) est un corps creux en acier à très haute limite élastique, la limite élastique de l'acier étant supérieure à 450 MPa.

3. Paroi de véhicule (12) selon la revendication 1 ou 2, comprenant une couche de protection (17), chaque renfort structurel (15) et la peau de véhicule (16) étant couverts de la couche de protection (17), la couche de protection (17) comprenant une couche de peinture déposée par cataphorèse.

4. Paroi de véhicule (12) selon l'une quelconque des revendications précédentes, comprenant entre quatre et quinze renforts structurels (15) et dans lequel la peau (16) est fixée à chacun des renforts structurels (15) par soudage par résistance et/ou par soudage laser, avec ou sans l'apport d'une colle structurelle (20).

5. Procédé (100) de fabrication d'une paroi de véhicule (12), la paroi (12) étant selon l'une quelconque des revendications précédentes, le procédé (100) comprenant les étapes suivantes :
- fourniture (110) d'un flan en acier pour chacun des renforts structurels (15) et d'une peau de véhicule (16) ;
- emboutissage (120) de chacun des flans en formant un renfort structurel (15) ; et
- fixation (140) de chacun des renforts structurels (15) sur la peau de véhicule (16) par soudage par résistance, avec ou sans l'apport d'une colle structurelle (20) pour former la paroi de véhicule (12).

6. Procédé (100) de fabrication d'une paroi de véhicule (12) selon la revendication 5, comprenant l'étape suivante :
- découpe laser (130) de la peau de véhicule (16) avant la fixation de chacun des renforts structurels (15) sur la peau de véhicule (16).

7. Procédé (100) de fabrication d'une paroi de véhicule (12) selon l'une quelconque des revendications 5 ou 6, comprenant l'étape suivante :
- étanchéification (150) d'une interface entre la peau de véhicule (16) et au moins un renfort structurel (15) par mise en place d'un cordon étanche (32) à l'interface entre la peau de véhicule (16) et l'au moins un renfort structurel (15).

8. Procédé (100) de fabrication d'une paroi de véhicule (12) selon l'une quelconque des revendications 5 à 7, comprenant l'étape suivante :
- cataphorèse (160) de la paroi de véhicule (12) formée à la suite de l'étape de fixation (140) de chacun des renforts structurels (15) sur la peau de véhicule (16).

9. Procédé (100) de fabrication d'une paroi de véhicule (12) selon l'une quelconque des revendications 5 à 8, comprenant l'étape suivante :
- peinture (170) de la paroi de véhicule (12) formée à la suite de l'étape (140) de fixation de la peau sur chacun des renforts structurels, l'étape (170) de peinture de la paroi de véhicule (12) n'étant pas précédée d'une étape de redressage de la peau de véhicule (16) ou de préparation avant la peinture.

10. Véhicule (10), de préférence ferroviaire, comprenant une paroi de véhicule (12) selon l'une quelconque des revendications 1 à 4.

## Patentansprüche

1. Fahrzeugwand (12), vorzugsweise eines Schienenfahrzeugs, umfassend:
- mindestens einen Satz (14) von Strukturverstärkungen (15), jede Strukturverstärkung (15) umfassend ein tiefgezogenes Stahlelement (24); und
- eine Haut (16) eines Fahrzeugs;
wobei die Fahrzeughaut (16) ein Stahlblech ist, wobei die Fahrzeughaut (16) durch Widerstandsschweißen mit oder ohne Zufuhr eines Strukturklebers an mindestens einer Strukturverstärkung (15) befestigt ist.

2. Fahrzeugwand (12) nach Anspruch 1, wobei das tiefgezogene Stahlelement (24) ein Hohlkörper aus Stahl mit sehr hoher Streckgrenze ist, wobei die Streckgrenze des Stahls größer als 450 MPa ist.

3. Fahrzeugwand (12) nach Anspruch 1 oder 2, umfassend eine Schutzschicht (17), wobei jede Strukturverstärkung (15) und die Fahrzeughaut (16) mit der Schutzschicht (17) bedeckt sind, wobei die Schutzschicht (17) eine kataphoretisch abgeschiedene Farbschicht umfasst.

4. Fahrzeugwand (12) nach einem der vorherigen Ansprüche, umfassend zwischen vier und fünfzehn Strukturverstärkungen (15) und wobei die Haut (16) durch Widerstandsschweißen und/oder Laserschweißen mit oder ohne Zufuhr eines Strukturklebers (20) an jeder der Strukturverstärkungen (15) befestigt ist.

5. Verfahren (100) zum Herstellen einer Fahrzeugwand (12), wobei die Wand (12) gemäß einem der vorherigen Ansprüche ist, das Verfahren (100) umfassend die folgenden Schritte:
- Bereitstellen (110) eines Stahlrohlings für jede der Strukturverstärkungen (15) und einer Fahrzeughaut (16);
- Tiefziehen (120) von jedem der Rohlinge unter Bildung einer Strukturverstärkung (15); und
- Befestigen (140) jeder der Strukturverstärkungen (15) durch Widerstandsschweißen, mit oder ohne Zufuhr eines Strukturklebers (20), an der Fahrzeughaut (16), um die Fahrzeugwand (12) zu bilden.

6. Verfahren (100) zum Herstellen einer Fahrzeugwand (12) nach Anspruch 5, umfassend den folgenden Schritt:
- Laserschneiden (130) der Fahrzeughaut (16) vor dem Befestigen jeder der Strukturverstärkungen (15) an der Fahrzeughaut (16).

7. Verfahren (100) zum Herstellen einer Fahrzeugwand (12) nach einem der Ansprüche 5 oder 6, umfassend den folgenden Schritt:
- Abdichten (150) einer Schnittfläche zwischen der Fahrzeughaut (16) und mindestens einer Strukturverstärkung (15) durch Anbringen einer wasserdichten Schnur (32) an der Schnittstelle zwischen der Fahrzeughaut (16) und der mindestens einen Strukturverstärkung (15).

8. Verfahren (100) zum Herstellen einer Fahrzeugwand (12) nach einem der Ansprüche 5 bis 7, umfassend den folgenden Schritt:
- Kataphorese (160) der Fahrzeugwand (12), die nach dem Schritt eines Befestigens (140) jeder der Strukturverstärkungen (15) an der Fahrzeughaut (16) gebildet wird.

9. Verfahren (100) zum Herstellen einer Fahrzeugwand (12) nach einem der Ansprüche 5 bis 8, umfassend den folgenden Schritt:
- Lackieren (170) der Fahrzeugwand (12), die nach dem Schritt (140) eines Befestigens der Haut an jeder der Strukturverstärkungen gebildet wird, wobei dem Schritt (170) eines Lackierens der Fahrzeugwand (12) kein Schritt eines Ausrichtens der Fahrzeughaut (16) oder einer Vorbereitung vor dem Lackieren vorausgeht.

10. Fahrzeug (10), insbesondere Schienenfahrzeug, umfassend eine Fahrzeugwand (12) nach einem der Ansprüche 1 bis 4.

## Claims

1. Vehicle wall (12), preferably for a rail vehicle, comprising:
- at least one set (14) of structural reinforcements (15), each structural reinforcement (15) comprising a pressed steel element (24); and
- a vehicle skin (16);
where the vehicle skin (16) is a steel sheet, the vehicle skin (16) being attached to at least one structural reinforcement (15) by resistance welding, with or without the addition of a structural adhesive.

2. Vehicle wall (12) as claimed in claim 1, wherein the pressed steel member (24) is a hollow body of very high yield strength steel, the yield strength of the steel being greater than 450 MPa.

3. Vehicle wall (12) according to claim 1 or 2, comprising a protective layer (17), each structural reinforcement (15) and the vehicle skin (16) being covered with the protective layer (17), the protective layer (17) comprising a layer of paint deposited by cataphoresis.

4. Vehicle wall (12) according to any one of the preceding claims, comprising between four and fifteen structural reinforcements (15) and in which the skin (16) is fixed to each of the structural reinforcements (15) by resistance welding and/or laser welding, with or without the addition of a structural adhesive (20).

5. Method (100) of manufacturing a vehicle wall (12), the wall (12) being according to any one of the preceding claims, the method (100) comprising the following steps:
- supply (110) of a steel blank for each of the structural reinforcements (15) and a vehicle skin (16);
- stamping (120) of each of the flanks to form a structural reinforcement (15); and
- fixing (140) each of the structural reinforcements (15) to the vehicle skin (16) by resistance welding, with or without the addition of a structural adhesive (20) to form the vehicle wall (12).

6. Method (100) of manufacturing a vehicle wall (12) according to claim 5, comprising the following step:
- laser cutting (130) of the vehicle skin (16) prior to fixing each of the structural reinforcements (15) to the vehicle skin (16).

7. Method (100) of manufacturing a vehicle wall (12) according to any of claims 5 to 6, comprising the following steps:
- sealing (150) of an interface between the vehicle skin (16) and at least one structural reinforcement (15) by placing a sealing bead (32) at the interface between the vehicle skin (16) and the at least one structural reinforcement (15).

8. Method (100) of manufacturing a vehicle wall (12) according to any one of claims 5 to 7, comprising the following step:
- cataphoresis (160) of the vehicle wall (12) formed following the step of fixing (140) each of the structural reinforcements (15) to the vehicle skin (16).

9. Method (100) of manufacturing a vehicle wall (12) according to any one of claims 5 to 8, comprising the following step:
- painting (170) of the vehicle wall (12) formed following the step (140) of fixing the skin to each of the structural reinforcements, the step (170) of painting the vehicle wall (12) not being preceded by a step of straightening the vehicle skin (16) or preparing it prior to painting.

10. Vehicle (10), preferably rail vehicle, comprising a vehicle wall (12) according to any one of claims 1 to 4.
